**Europäisches Patentamt**

**European Patent Office**

**Office européen des brevets**

(19)

(11) Veröffentlichungsnummer: **0 134 910**
**B1**

(12) # EUROPÄISCHE PATENTSCHRIFT

(45) Veröffentlichungstag der Patentschrift:
**14.09.88**

(51) Int. Cl.⁴: **B 23 H 3/00,** B 23 H 3/04,
B 23 H 5/00

(21) Anmeldenummer: **84106285.4**

(22) Anmeldetag: **01.06.84**

(54) Verfahren zum funkenerosiven Schneiden eines Ausfallstücks ineinem Werkstück mit parallelen Flächen.

(30) Priorität: **09.06.83 CH 3173/83**

(43) Veröffentlichungstag der Anmeldung:
**27.03.85 Patentblatt 85/13**

(45) Bekanntmachung des Hinweises auf die Patenterteilung:
**14.09.88 Patentblatt 88/37**

(84) Benannte Vertragsstaaten:
**DE FR GB IT SE**

(56) Entgegenhaltungen:
**DE - A - 2 351 357**
**DE - A - 2 935 102**
**GB - A - 2 042 958**

**PATENT ABSTRACTS OF JAPAN, unexamined applications, sektion M, Band 4, No. 49, 15. April 1980, THE PATENT OFFICE JAPANESE GOVERNMENT, Seite 91 M 7**
**PATENT ABSTRACTS OF JAPAN, unexamined applications, Sektion M, Band 4, No. 49, 15. April 1980, THE PATENT OFFICE JAPANESE GOVERNMENT, Seite 94 M 7**
**PATENT ABSTRACTS OF JAPAN, unexamined applications, Section M, Band 7, No. 106, 10. Mai 1983, THE PATENT OFFICE JAPANESE GOVERNMENT, Seite 78 M 213**

(73) Patentinhaber: **AG für industrielle Elektronik AGIE Losone bei Locarno, CH-6616 Losone/Locarno (CH)**

(72) Erfinder: **Weber, Benno, Via Monte Tabor, CH-6613 Porto Ronco (CH)**

(74) Vertreter: **EGLI-EUROPEAN PATENT ATTORNEYS, Horneggstrasse 4, CH-8008 Zürich (CH)**

(56) Entgegenhaltungen: (Fortsetzung)
**PATENT ABSTRACTS OF JAPAN, unexamined applications, Sektion M, Band 5, No. 80, 26. Mai 1981, THE PATENT OFFICE JAPANESE GOVERNMENT, Seite 14 M 70**
**PATENT ABSTRACTS OF JAPAN, unexamined applications, Sektion M, Band 6, N0. 1, 7. Jänner 1982, THE PATENT OFFICE JAPANESE GOVERNMENT, Seite 161 M 105**

### Beschreibung

Beim funkenerosiven Schneiden werden Werkstücke gemäss vorgegebenen Bahndaten mit Hilfe eines Schneiddrahtes bearbeitet. Schneiddraht und Werkstück sind an einen Generator angeschlossen, welcher unter dem Einfluss einer Regelschaltung wohl definierte Strom- bzw. Spannungsimpulse zur Aufrechterhaltung des funkenerosiven Vorganges zwischen Schneiddraht und Werkstück abgibt. Häufig bilden die zu schneidenden Formen im Werkstück eine geschlossene, geometrische Bahnkurve, so dass der Schneiddraht gegen Ende des Schneidvorganges wieder an seiner Ausgangsposition zurückkommt und damit ein sogenanntes Ausfallstück entsteht, welches sich gegenüber dem eingespannten Werkstück zu lösen droht. Je nach Anwenderwunsch ist entweder das ausgeschnittene Innenteil oder die umgebende Aussenform für die weitere Verwendung vorgesehen. Gegen Ende des Schneidvorganges besteht nun die Gefahr, dass ein nicht eingespanntes Ausfallstück beim Lösen vom restlichen eingespannten Werkstück die Drahtelektrode zerstört oder an Teilen der Bearbeitungsvorrichtung hängenbleibt. Ein Einspannen auch des Ausfallstücks ist beim Schneiden von geschlossenen Kurven nicht erwünscht, da in diesem Fall der freie Zugang der Drahtführungsköpfe nicht über die gesamte Schneidbahn gewährleistet ist, so dass das Werkstück umgespannt werden müsste. Dies ist im Hinblick auf den Einsatz der Vorrichtung in Serienfabrikation sowie auf einen möglichst automatischen Betrieb unerwünscht.

Zur Sicherung eines Ausfallstücks sind bereits Massnahmen bekannt, beispielsweise das Stehenlassen eines dünnen Reststeges zwischen dem Werkstück und dem Ausfallstück, wobei das Ausfallstück nach Beendigung des Schneidvorganges durch äussere Krafteinwirkung, beispielsweise mit einem Hammerschlag, vom restlichen Werkstück gelöst wurde. Der Nachteil dieses Verfahrens ist, dass ein manueller Bearbeitungsvorgang notwendig ist, den es im Hinblick auf automatische Bearbeitungsmethoden möglichst zu umgehen gilt. Ein weiterer Nachteil des bekannten Verfahrens ist, dass der Steg im Hinblick auf das jeweils zu schneidende Material sorgfältig dimensioniert werden muss, damit sich das Ausfallstück auch tatsächlich abschlagen lässt. Ein zusätzlicher Nachteil besteht darin, dass die Bruchstelle in der Regel keine Nachbearbeitung erlaubt, so dass die saubere Bearbeitung von geschlossenen Schneidkurven nicht in befriedigender Weise gewährleistet ist.

Im Hinblick auf diese Schwierigkeiten wurde bereits vorgeschlagen (JP-A-56-126 526/1981), den Schneiddraht in Abweichung von der bisher üblichen Praxis horizontal anzuordnen und das Werkstück so einzuspannen, dass aufgrund der gewünschten Schneidkurve ein abgeschnittenes Innenteil senkrecht nach unten sinkt und auf der bereits geschnittenen Fläche des Werkstücks abgestützt wird. Ein solches Verfahren lässt sich nur anwenden, wenn relativ breite Schnittflächen, d.h.

grosse Werkstückdicken zur Verfügung stehen und wenn die Schnittspur im Vergleich zur Breitenabmessung der geschnittenen Kontur nicht allzu gross ist. Eine breite Anwendung des vorgeschlagenen Verfahrens ist allein aus diesem Grund nicht möglich.

Ein weiterer Vorschlag (JP-AS 1-16 674/1976) richtet sich auf eine Klebeverbindung zwischen dem Ausfallstück und dem restlichen Werkstück, wobei mit Hilfe eines Klebers oder mit Hilfe von Haltern eine mechanische und elektrische Verbindung zwischen beiden Teilen hergestellt wird. Auch dieser Vorschlag lässt sich nicht in einem vollautomatischen Arbeitsprozess einsetzen. Gemäss einem anderen Vorschlag nach DE-A1-2 351 357 sollen niedrigschmelzende Metalle nach Erwärmung in den bereits geschnittenen Spalt eingetropft werden oder mit Hilfe von anaeroben Klebern der bereits geschnittene Spalt überbrückt werden. Der Nachteil dieses Vorschlages besteht darin, dass die entsprechenden Dosiervorrichtungen sehr präzise auf die bereits geschnittene, in der Regel sehr schmale Spur ausgerichtet werden müssen, um das Eindringen des Verbindungsmittels sicherzustellen. Die sich bildende Verbindung zwischen Ausfallstück und Werkstück schliesst die Anwendung einer Nachschneidtechnik aus, bei welcher die Schneidvorrichtung automatisch, ohne Umspannen des Werkstücks, zur Verbesserung der Oberflächenqualität, bzw. zum feinen Nachschneiden an Ecken, eingesetzt wird. Zusätzlich wirkt sich nachteilig aus, dass nach Beendigung des Schneidvorganges Reste des Verbindungsmittels auf den bearbeiteten Flächen vorhanden sind und mühsam von diesen entfernt werden müssen.

Das Dokument JP-A-58-28 429 schildert ein Beispiel derjenigen Vorgehensweise, nach welcher ein Fachmann in Unkenntnis der vorliegenden Erfindung normalerweise verfährt, wenn er einen Verbindungssteg zwischen Werkstück und Ausfallstück zu belassen hat. Diese Vorgehensweise besteht darin, voneinander verschiedene Probleme nicht zu vermischen, sondern nacheinander und separat zu lösen. Im vorliegenden gilt es (a) das Werkstück zu schneiden und dabei eine bestimmte Oberflächegüte zu erreichen, und (b) den übriggelassenen Verbindungssteg auf die gewünschte Form und Dimension zurechtzuschneiden. Tatsächlich wird in JP-A-58-28 429 beschrieben, die Schritte (a) und (b) nacheinander auszuführen. Die Bearbeitungsschritte, die auf die Oberflächen des Werkstückes angewandt werden können, um diesen die gewünschte Struktur zu verleihen, können nicht auf jenen Bereich der genannten Fläche angewandt werden, die der Steg einnimmt. Die Schwächung des Steges erfolgt in einem einzigen, letzten Schritt, so dass keine Nachbearbeitung der dabei neu entstehenden Flächen durch die Elektrode möglich ist. Eine solche Nachbearbeitung muss also nachträglich und mit zusätzlichen Mitteln erfolgen.

Aufgabe der vorliegenden Erfindung ist es, ein Verfahren anzugeben, welches ein späteres, einfaches Trennen des Ausfallstücks vom Werkstück erlaubt, ohne dass irgendwelche Nacharbeiten notwendig sind. Diese Aufgabe wird erfindungsgemäss durch das im Patentanspruch 1 definierte Verfahren gelöst. Eine vorteilhafte Weiterbildung des Verfahrens ergibt sich aus dem Patentanspruch 2.

Als Vorteil des erfindungsgemässen Verfahrens ergibt sich beispielsweise beim Schneiden geschlossener Konturen, wie sie beispielsweise für Pressstempel oder -matrizen angewendet werden, eine durchgehend bearbeitete Schnittfläche, die nicht wie bisher durch Stegreste, Kleber oder dgl. gestört ist, bzw. die eine Nacharbeitung erforderlich machen. Der verbleibende Reststeg stört bei derartigen Werkstücken bei der späteren Verwendung im allgemeinen nicht, da dieses Teil des Werkstücks zum Einspannen dient.

Im folgenden werden Einzelheiten und Ausführungsbeispiele der Erfindung anhand der Zeichnungen näher erläutert. Es zeigen:

Fig. 1 die Prinzipdarstellung anhand eines als Ausführungsbeispiel dienenden Werkstücks,

Fig. 2 die Schnittdarstellung durch den verbleibenden Reststeg gemäss Fig. 1 und

Fig. 3 ein weiteres Ausführungsbeispiel, welches die Anwendung des erfindungsgemässen Verfahrens bei gemischtem, zylindrischem und konischem Schnitt zeigt.

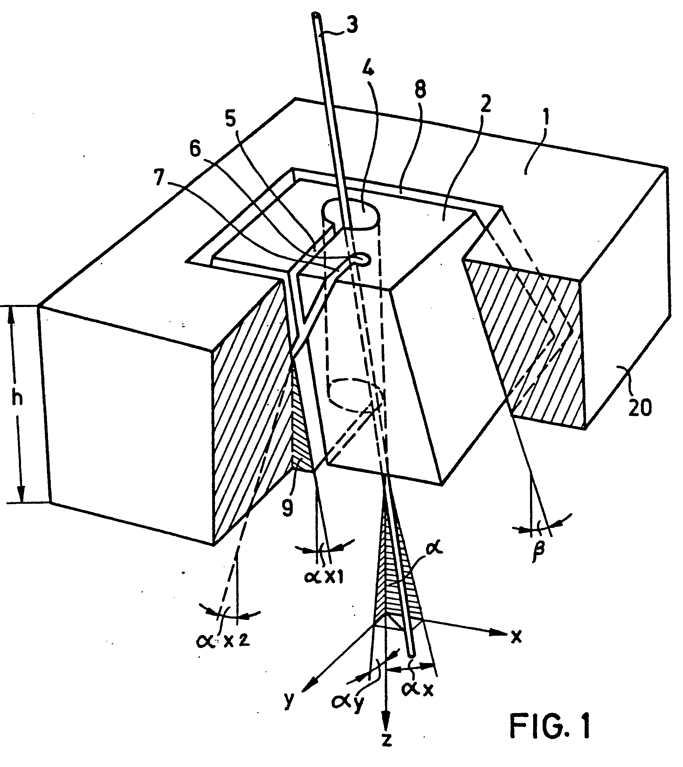

Fig. 1 zeigt als Ausführungsbeispiel ein quaderförmiges Werkstück 1, welches zur besseren Übersicht mit einer ausgebrochenen, vorderen Ecke dargestellt ist. Ein im Innern des Werkstücks 1 angeordnetes Ausfallstück 2 ist mit Hilfe einer Werkzeugelektrode 3, zum Beispiel einem Schneiddraht, durch funkenerosives Schneiden nahezu vollständig herausgeschnitten worden. Das Ausfallstück 2 steht mit dem restlichen Werkstück in einer Restverbindung, welche durch einen Steg 9 definiert ist. Dieser Steg 9 nimmt nur einen Teil der Schnitthöhe h ein, welche im Beispiel mit der Werkstückhöhe identisch ist. Die von der Werkzeugelektrode 3 erzeugte Schnittkurve 8 kann dabei durch einen «zylindrischen» Schnitt erzeugt werden, wobei die Werkzeugelektrode 3 parallel zu den Seitenflächen 20 des quaderförmigen Werkstücks 1 verläuft, oder der Schnitt kann «konisch» erfolgen, wie in Figur 1 angedeutet, wobei die Werkzeugelektrode 3 einen Winkel $\beta$ gegenüber der Senkrechten aufweist.

Die Bearbeitung des Werkstücks wird in einer Startbohrung 4 begonnen, die im Werkstück vorher vorbereitet wurde. Wurde die Startbohrung 4 gross genug gewählt, kann innerhalb der Startbohrung die Werkzeugelektrode 3 bereits auf einen räumlichen Schrägungswinkel $\alpha$ gegenüber der Senkrechten eingerichtet werden, der sich im kartesischen Koordinatensystem X, Y, Z der Maschine wie in Figur 1 gezeigt, darstellt. Der Winkel $\alpha$ setzt sich zusammen aus der vektoriellen Summe des Neigungswinkels $\alpha_X$ in der X, Z-Ebene und dem Neigungswinkel $\alpha_Y$ in der Y, Z-Ebene. Diese Winkellagen sind im unteren Teil der Figur 1 dargestellt. Die Werte werden in einen mit der Maschine verbundenen Rechner eingegeben.

Im folgenden wird die Elektrode 3 längs einer Anfahrstrecke 5 in eine Eintrittszone der zu schneidenden Schnittkurve 8 bewegt. Dort tritt die Elektrode unter dem Winkel $\alpha_{X1}$ bezüglich der X, Z-Ebene ein. Alternativ kann die Elektrode 3 auch ohne Schräglage längs der Anfahrstrecke angesetzt werden und während des Durchfahrens der Anfahrstrecke 5 in die gewünschte Ausgangsschräglage gebracht werden.

Nach Eintreten der Elektrode 3 in die Schnittkurve 8 wird diese in bekannter Weise, beispielsweise im Gegenuhrzeigersinn, durchfahren und geschnitten. Der im Beispiel angegebene Konuswinkel $\beta$ für die Neigung des Schnittprofils relativ zur Werkstückgeometrie kann während des Schneidens auf einem konstanten Wert gehalten werden, zum Beispiel auch auf dem Wert 0, oder er kann während des Schneidvorganges kontinuierlich oder unstetig variiert werden. Im gezeigten Ausführungsbeispiel sollte nach Möglichkeit das erste Stück der Schnittkurve 8 nach der Anfahrstrecke 5 eine ebene Fläche bilden. Dadurch lässt sich erreichen, dass nach Umfahren der Schnittkurve 8 die Neigung der Elektrode 3 vor Erreichen der Anfangszone auf einen geänderten Neigungwinkel $\alpha_{X2}$ verschwenkt werden kann. Nach diesem Verschwenken verlässt die Elektrode 3 die Schnittkurve 8 und geht in eine Ausfahrstrecke 7 über und schliesslich in eine Ausfahrbohrung 6. Durch diese Massnahme bleibt das Ausfallstück 2 über den Steg 9 auch nach Beendigung des Schneidvorganges mit dem Werkstück 1 verbunden. Die Ausfahrbohrung 6 kann mit der Elektrode 3 mit Hilfe des funkenerosiven Verfahrens direkt geschnitten werden. Die Ausfahrbohrung 6 ist nur dann notwendig, wenn die Bearbeitung mit dem Erreichen der Ausfahrstrecke 7 noch nicht beendet ist. In einem solchen Fall kann innerhalb der Bohrung 6 eine neue Maschineneinstellung sowie ein neuer Konuswinkel $\beta$ zum Werkstück 1 eingestellt werden, so dass anschliessend die Schnittkurve 8 in Gegenrichtung durchfahren werden kann, um zum Beispiel einen Glättschnitt auf der bearbeiteten Werkstückoberfläche anzubringen. Solche Glättschnitte oder Änderungsschnitte können auch mehrfach hin und her im Wechsel vollzogen werden. Ist für solche Wiederholschnitte eine besonders starre Befestigung des Ausfallstücks am Werkstück notwendig, kann der Steg 9 bis zum allerletzten Schnitt entsprechend gross belassen werden. Erst beim letzten Arbeitshub wird die Fläche dieses Steges so weit verkleinert, dass sie den zuvor berechneten Ausbruchkräften nicht mehr widersteht, welche zum Lösen des Ausfallstückes 2 nach Beendigung des gesamten Bearbeitungsvorgangs und nach dem Entfernen von der Maschine nötig sind.

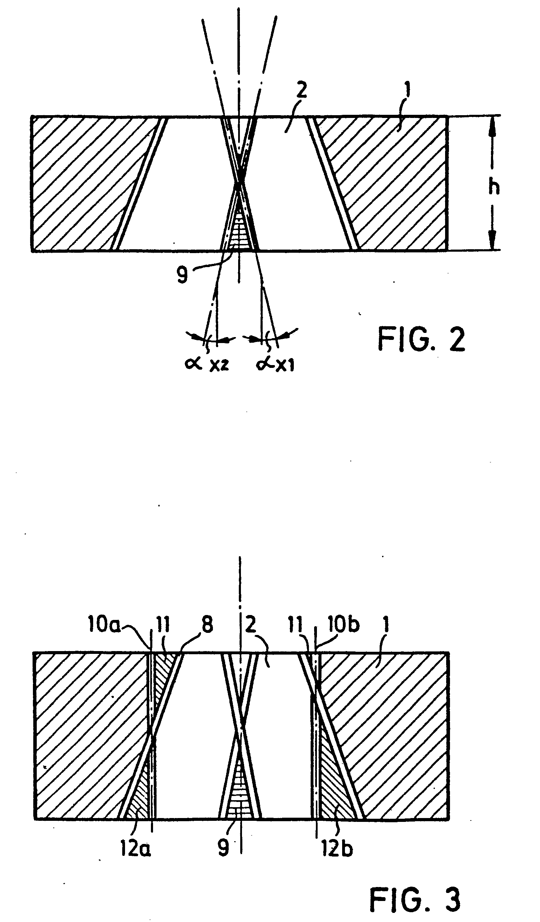

Die in Figur 2 gezeigte Schnittdarstellung, welche dem vordersten Teil der Schnittkurve 8 gemäss Figur 1 entspricht, zeigt das Werkstück 1 mit dem von diesem weitgehend gelösten Ausfallstück 2, wobei allein der Steg 9 als Verbindung zwischen beiden Teilen stehengeblieben ist. Der Steg 9 ist im Beispiel von dreieckförmigem Querschnitt. Die Schenkel des Steges 9 sind in der X, Z-Ebene durch den Anschnittwinkel $\alpha_{X1}$ und dem Ausschnittwinkel $\alpha_{X2}$ begrenzt. Aus der Darstellung gemäss Figur 2 ergibt sich, dass der obere Teil der Werkstückhöhe h kontinuierlich und glatt entsprechend der Schnittkurve 8 durchgeschnitten wurde, so dass in diesem Teil eine vom Anfang bis zum Endpunkt ohne Unterbrechung durchgehende Schnittkontur entsteht.

Figur 3 zeigt die Anwendung des erfindungsgemässen Verfahrens beim Schneiden eines Werkstücks, bei welchem kombinierte, kegelige bzw. konische und zylindrische Flächen geschnitten werden. In der linken Bildhälfte ist die Schnittkurve 8 zu erkennen, wie sie gemäss der bisherigen Beschreibung anhand von Figur 1 entstehen würde. Soll nun auf eine zweite Schnittkurve 10 übergegangen werden, wird die Werkzeugelektrode 3 auf einen anderen Winkel $\alpha$ eingestellt, der in dem gezeigten Beispiel einen zylindrischen Schnitt gewährleistet. Wie die Figur 3 zeigt, entstehen durch einen derartigen Schnitt, umlaufend zwischen dem Werkstück 1 und dem Ausfallstück 2, kegelige Kernstücke 11 bzw. 12a, die sich vom Werkstück 1 lösen. Gemäss dem erfindungsgemässen Verfahren lassen sich derartige Bearbeitungsaufgaben beispielsweise durch die beiden folgenden Methoden lösen.

Gemäss einem ersten Verfahren wird bei Ausführung wiederholter Schnitte die Lage der Elektrode 3 von den Bedingungen gemäss der Kurve 8 zu denjenigen der Kurve 10 in kleinen Intervallschritten durch wiederholtes Umlaufen so verändert, dass die in Figur 3 schraffiert gezeichneten Kegelstücke 11 bzw. 12a komplett abgetragen werden und damit die Bearbeitung nicht gestört werden kann. Die Veränderung der Schnittspurlage kann damit immer nur unter Berücksichtigung der Schnittspurbreite erfolgen, gemäss der jeweils gewählten Drahtstärke und der Spaltweite für die elektrischen Entladungen.

Gemäss einem zweiten Verfahren, welches im rechten Teilbild gemäss Figur 3 gezeigt ist, ist die Lage der senkrechten Schnittspur 10b so gewählt, dass ein oberer kegeliger Teil 11 gerade eben verschwindet und entsprechend ein unterer kegeliger Teil 12b an Fläche zunimmt. Dadurch entsteht bereits eine geringe, aber durchaus nutzbare Bundhöhe, wie sie bei der Fertigung von Stanzwerkzeugen verlangt wird und welche einen durchgehenden sauberen Schnitt gemäss der vorgegebenen Kontur aufweist. Der untere Kegelteil 12b hingegen kann nach der gleichen Methode der veränderlichen Steuerung des Eintrittswinkels $\alpha_{X1}$ in die Schnittkurve 8 und durch Steuerung des Austrittswinkels $\alpha_{X2}$ aus der Schnittkurve 8 derart gesteuert werden, dass eine vorzugsweise spitzwinklige Stegverbindung gemäss Figur 1 mit dem Werkstück 1 bestehen bleibt, welche nur einen Teil der Werkstückhöhe h einnimmt. Zu diesem Zweck muss eine Neigung $\alpha_X$ gemäss Figur 1 für den Ausfahrvorgang aus der Schnittkurve 8 gewählt werden, wobei die Neigung $\alpha_X$ grösser ist als $\alpha_{X1}$ bzw. $\alpha_{X2}$ bei der ersten kegeligen Bearbeitung.

Das erfindungsgemässe Verfahren kann sowohl für die Fertigung von Stempelteilen wie auch von Matrizenteilen angewendet werden. Damit kann die Wahl des jeweils besten Sicherungssystems für die Bearbeitung nach rein wirtschaftlichen Gesichtspunkten erfolgen. Es stellt jedoch eine wesentliche wirtschaftliche Bedeutung dar, dass mit Hilfe des erfindungsgemässen Verfahrens die funkenerosiven Schneideinrichtungen weniger aufwendig gebaut werden können als dies bisher der Fall war, da auf spezielle Einrichtungen zur Sicherung der Ausfallstücke aufgrund entsprechend gewählter Schneidparameter zur Erhaltung des Verbindungssteges vollständig verzichtet werden kann.

**Patentansprüche**

1. Verfahren zum funkenerosiven Schneiden eines Ausfallstücks (2) in einem Werkstück (1), das zwei einander parallele, in vorbestimmten Abstand (h) voneinander liegende Flächen aufweist, mit Hilfe einer Werkzeugelektrode (3), welche derart gesteuert wird, dass das Ausfallstück (2) stets mit dem übrigen Teil des Werkstücks (1) durch einen Verbindungssteg (9) verbunden ist, eine Fläche des Verbindungsstegs (9) Teil einer ursprünglichen Fläche des noch unbearbeiteten Werkstücks (1) ist, und der Verbindungssteg (9) in seinem Endzustand nach Vollendung des Verfahrens bezüglich seines zu den genannten Flächen senkrechten Querschnitts so bemessen ist, dass das Ausfallstück (2) in seinem Endzustand nach Vollendung des Verfahrens am übrigen Teil (1) des Werkstücks noch gehalten wird, aber davon leicht getrennt werden kann, dadurch gekennzeichnet, dass der Endzustand des Verbindungsstegs (9) mittels geeigneter Steuerung der Werkzeugelektrode (3) bereits vor dem Endzustand des Ausfallstücks (2) erreicht wird, und die senkrecht zu den genannten Flächen liegende Dimension des Verbindungsstegs (9) bereits kleiner ist als der genannte Abstand (h), bevor der Endzustand des Ausfallstücks (2) erreicht worden ist.

2. Verfahren nach Anspruch 1 zum Fertigen von Stanzwerkzeugen.

**Claims**

1. A method of spark-erosion cutting of a waste piece (2) in a workpiece (1) having two surfaces parallel to each other and spaced from each other by predetermined distance (h) by means of a tool electrode (3) which is controlled in such manner that the waste piece (2) always remains linked to the remaining part of the workpiece (1) by a connecting web (9), a surface of the connecting web (9) constitutes a portion of an initial surface of the workpiece (1) before any working has taken place, and the connecting web (9), in its final state after completion of the method, is dimensioned in respect of its transverse section perpendicular to said surfaces in such manner that the waste piece (2), in its final state after completion of the method, still remains fixed to the remaining part of the workpiece (1) but can be easily separated therefrom, characterized in that the final state of the connecting web (9) is already attained, by means of an appropriate control of the tool electrode (3), before the final state of the waste piece (2) is attained, and that dimension of the connecting web (9) which is directed perpendicular to said surfaces already is smaller than said distance (h) before the final state of the waste piece (2) is attained.

2. A method according to claim 1 for making stamped worktools.

**Revendications**

1. Procédé de découpage par électroérosion d'une pièce de chute (2) dans une pièce à usiner (1) qui comporte deux surfaces parallèles entre elles et situées à une distance prédéterminée (h) l'une de l'autre au moyen d'une électrode-outil (3) qui est commandée de telle sorte que la pièce de chute (2) demeure toujours reliée par une entretoise de liaison (9) avec la partie restante de la pièce à usiner (1), une surface de l'entretoise de liaison (9) constitue une partie d'une surface initiale de la pièce à usiner (1) avant tout usinage, et dans son état final après application complète du procédé l'entretoise de liaison (9) est dimensionnée, en ce qui concerne sa section transversale perpendiculaire auxdites surfaces, de telle manière que dans son état final après application complète du procédé la pièce de chute (2) soit encore maintenue fixée à la partie restante (1) de la pièce à usiner mais qu'elle puisse en être facilement séparée, caractérisée en ce que l'état final de l'entretoise de liaison (9) est, au moyen d'une commande appropriée de l'électrode-outil (3), déjà atteint avant que soit atteint l'état final de la pièce de chute (2), et la dimension de l'entretoise de liaison (9) qui est orientée perpendiculairement auxdites surfaces est déjà plus petite que ladite distance (h) avant que soit atteint l'état final de la pièce de chute (2).

2. Procédé selon la revendication 1 appliqué à la fabrication d'outils par estampage.

FIG. 1

FIG. 2

FIG. 3